Europäisches Patentamt

European Patent Office

Office européen des brevets

(19)

(11) EP 1 197 884 A2

## (12) EUROPEAN PATENT APPLICATION

(43) Date of publication:
17.04.2002 Bulletin 2002/16

(51) Int Cl.7: G06F 17/30

(21) Application number: 01308668.1

(22) Date of filing: 11.10.2001

(84) Designated Contracting States:
AT BE CH CY DE DK ES FI FR GB GR IE IT LI LU
MC NL PT SE TR
Designated Extension States:
AL LT LV MK RO SI

(30) Priority: 12.10.2000 US 689214

(71) Applicant: SIEMENS CORPORATE RESEARCH,
INC.
Princeton, New Jersey 08540 (US)

(72) Inventor: Chakraborty, Amit
Cranbury, NJ 08512 (US)

(74) Representative:
O'Connell, David Christopher et al
Haseltine Lake & Co.,
Imperial House,
15-19 Kingsway
London WC2B 6UD (GB)

(54) Method and apparatus for authoring and viewing audio documents

(57) A method according to one embodiment of the present invention is provided for authoring an audio file. The audio file 202 is segmented into voiced and unvoiced segments 102, a match is determined between a template and a candidate within the segmented audio file 104, and a match is registered for use as a hyperlink 106. The authored audio file can be played back 108 and navigated using the hyperlink.

202

Audio In

102

Audio Segmentation

104

Keyword/Phrase Finding

106

Link definition &
AIU File Creation

108

Playback

Different steps in the proposed solution

FIG. 1

EP 1 197 884 A2

Printed by Jouve, 75001 PARIS (FR)

## Description

## BACKGROUND OF THE INVENTION

### 1. Field of the Invention

The present invention relates to a method and an apparatus for hyperlinking audio, and more particularly to structuring the audio based on content for enabling links to and from the audio.

### 2. Description of Prior Art

Multimedia content combines several media formats, such as text, sound, and video, as well as combined audiovisual sources, e.g., movies. As such, a multimedia file typically contains a large amount of information. Navigating this information in an efficient and logical manner becomes a problem as the file size grows.

In a multimedia environment such as the World Wide Web (WWW), hyperlinks are used to navigate or connect multimedia content. Hyperlinks are an efficient way of locating related topics or sub-topics of interest. Thus, a user has the capability to extract desired content without needing to review all available information.

Audio files are increasingly generated and used within multimedia environments in a variety of applications, for example educational, defense and business. Often audio files are used in combination with other media forms, for example, video, text, and images.

The concept of hyperlinked audio, or hyperaudio, originated out of hyperlinked text. An early work in this genre is Storyspace, a hypertext writing environment from Eastgate Systems that employs a spatial metaphor in displaying links and nodes. Users create writing spaces, or containers for text and images, which are linked to other writing spaces. The writing spaces form a hierarchical structure that users can visually manipulate and reorganize. Synthesis is a tool based on Storyspace and allows one to index and navigate analog audio and video content associated with text in writing spaces. It provided an early demonstration of multimedia linking.

While multimedia applications for speech signals are relatively new, automatic speech recognition has been a topic of active research within the signal processing community for many years. See, for example, J.L. Flanagan, *Speech Analysis, Synthesis and Perception,* Springer Verlag, 1972. While there are several approaches for representing the speech signal, the most successful techniques have revolved around the use of short term spectral features where under local stationary assumptions, i.e., assuming that the stochastic properties of the speech signal remain relatively unchanged over short periods of time.

The most widely used models for speech recognition are based on the hidden Markov model assumption (HMM). The HHM uses the language syntax to predict the flow of the words and thus help in the search process to decipher speech signal. Here also, HMM models can be used to correctly predict the placement of phonemes.

The dynamic scope and non-visible nature of audio renders traditional techniques of authoring unavailable. Therefore a need exists for an effective method for authoring and managing audio encoding temporal links.

## SUMMARY OF THE INVENTION

A method according to one embodiment of the present invention is provided for authoring an audio file. The audio file is segmented into voiced and unvoiced segments, a match is determined between a template and a candidate segment within the segmented audio file, and the match is registered for use as a hyperlink.

In another embodiment of the present invention, segmenting includes organizing the audio file into frames, defining each frame with an energy greater than an energy threshold as voiced, defining each frame with an energy less than the energy threshold as unvoiced, and removing and combining with a neighboring frame, each frame with a duration less than a time threshold for dampening the effects of noise and determining a final segmentation.

Matching, according to one embodiment of the present invention, includes windowing the segmented audio file, transforming the segmented audio file to a frequency domain for each window, and extracting a feature vector for each window. Extracting the feature vector includes covering a frequency spectrum with overlapping bandpass filters; the energy output of these filters constitutes a feature vector.

The template is one of a keyword and a phrase.

Registering matches includes saving registered matches in a match file associated with the audio file. According to one embodiment of the present invention, the matches are anchorable information units and the match file contains the anchorable information units.

A computer program product, according to one embodiment of the present invention is provided including a computer usable medium having computer readable program code embodied therein for authoring an audio file. The computer readable program code in the computer program product includes computer readable program code for segmenting the audio file into voiced and unvoiced segments, computer readable program code for determining a match between a template and a candidate segment within the segmented audio file, and computer readable program code for registering the match for use as a hyperlink.

The computer readable program code for segmenting includes computer readable program code for organizing the audio file into frames, computer readable program code for defining each frame with an energy greater than an energy threshold as voiced, computer readable program code for defining each frame with an energy less than the energy threshold as unvoiced, and computer readable program code for removing and combining with a neighbor frame, each frame with a duration less than a time threshold for dampening the effects of noise and determining a final segmentation.

The computer readable program code for matching includes computer readable program code for windowing the segmented audio file, computer readable program code for transforming the segmented audio file to a frequency domain for each window, and computer readable program code for extracting a feature vector for each window.

The computer readable program code for extracting a feature vector for the windows includes computer readable program code for covering a frequency spectrum with overlapping bandpass filters, the energy output of these filters constituting a feature vector.

According to one embodiment of the present invention the template is a keyword and/or phrase.

According to another embodiment of the present invention the computer readable program code for registering matches includes computer readable program code for saving registered matches in a match file associated with the audio file. The audio file is structured in standard generalized markup language. The Matches are anchorable information units and the match file is an anchorable information unit file including the anchorable information units.

The anchorable information unit file includes a header, a footer, and an extracted information field. The header further includes an audio type definition, a file identification, and a description of the audio files contents. The extracted information field includes a unique identification for each segment and a frame boundary definition.

A method according to another embodiment of the present invention is provided for playing a hyperlinked audio file. The method loads an anchorable information unit corresponding to an audio file, represents the audio file during playback, and indicates the presence of the hyperlink in the representation. Representing the audio file includes displaying a waveform. The hyperlink is indicated on a corresponding section of the waveform.

According to yet anther embodiment of the present invention the method includes pausing the player upon selection of the hyperlink, and executing a link destination corresponding to the hyperlink.

## BRIEF DESCRIPTION OF THE DRAWINGS

Preferred embodiments of the present invention will be described below in more detail, with reference to the accompanying drawings:

Fig. 1 shows a block diagram of a method of authoring and viewing an audio document according to one embodiment of the present invention;

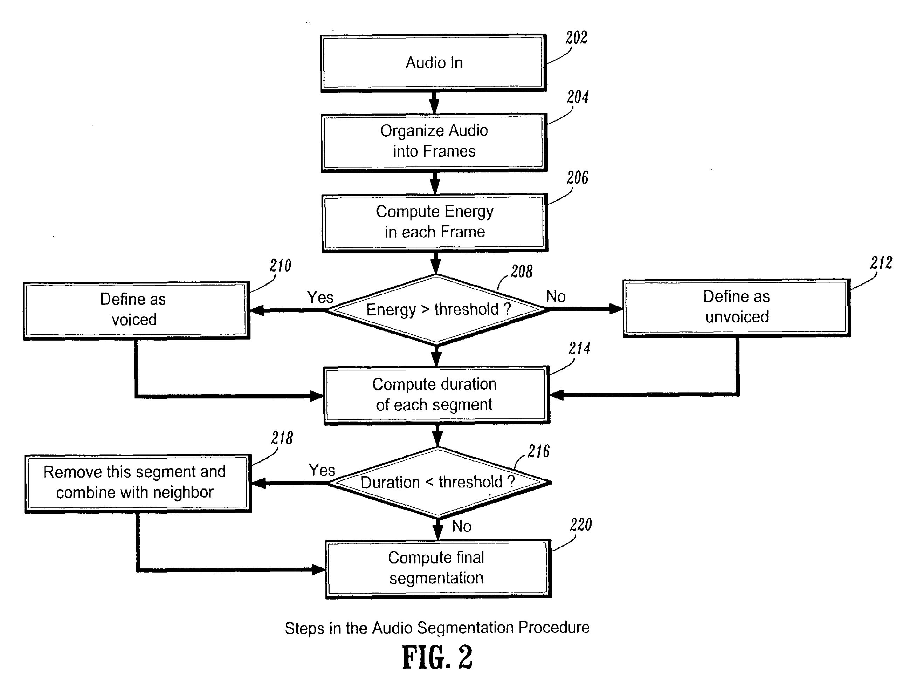

Fig. 2 shows a block diagram of a method of audio segmentation according to another embodiment of the present invention;
Fig. 3 shows a block diagram of a method of keyword/phrase finding according to yet another embodiment of the present invention; and
Fig. 4 shows a block diagram of a method of playback in a hyperlinked audio environment according to still another embodiment of the present invention.

## DETAILED DESCRIPTION OF PREFERRED EMBODIMENTS

It is to be understood that the present invention may be implemented in various forms of hardware, software, firmware, special purpose processors, or a combination thereof. In one embodiment, the present invention may be implemented in software as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and micro instruction code. The various processes and functions described herein may either be part of the micro instruction code or part of the application program (or a combination thereof) which is executed via the operating system. In addition, various other peripheral devices may be connected to the computer platform such as an additional data storage device and a printing device.

It is to be further understood that, because some of the constituent system components and method steps depicted in the accompanying Figures may be implemented in software, the actual connections between the system components (or the process steps) may differ depending upon the manner in which the present invention is programmed. Given the teachings of the present invention provided herein, one of ordinary skill in the related art will be able to contemplate these and similar implementations or configurations of the present invention.

In one embodiment of the present invention, navigation or traversing through the scenes of a hyperlinked audio system can be achieved via time-based links, i.e., opportunities of navigation only exist for a predefined duration. Traditionally, links imply static associations always available to a reader, whereas opportunities imply a window of time or space when an association may be active. According to an embodiment of the present invention, such opportunities appear dynamically, based on a current audio segment's context and provide navigational links to related information. In another embodiment of the present invention several text, image, or other media links are presented in connection with a hyperlinked audio segment. These multimedia links can appear concurrently or separately.

The user can make use of these links and traverse them, or the links become unavailable after the temporal window passes as the predetermined audio sequence continues to play. Interpretative textual narrations can also appear as explanatory textual narrations for an audio segment, which may or may not be user triggered, i.e., as the relevant segments are being played, for that duration, some associated text may appear on the screen, for example, along the lower portion. However, this can also be triggered by a user, for example, the user selects a link whereupon information associated with the link is revealed.

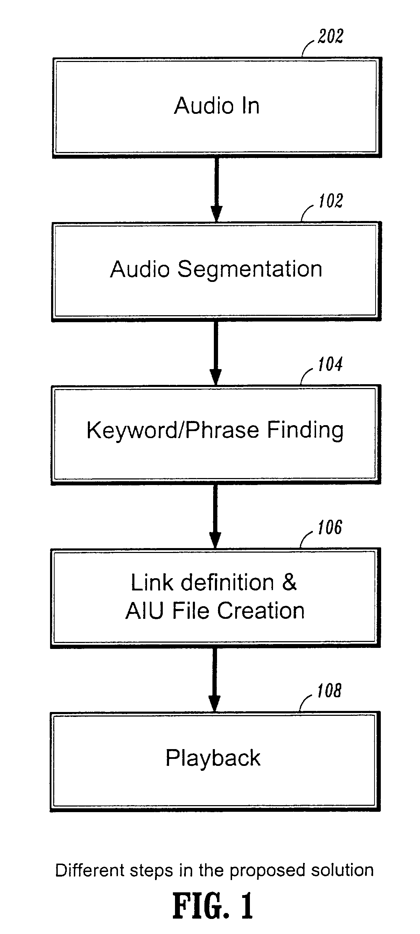

A preferred embodiment of the present invention will now be described in relation to its component elements and according to Fig. 1.

1. Audio Segmentation (Fig. 1, block 102)

In one embodiment of the present invention an audio file 202 is divided into voiced and unvoiced segments. The audio file is organized into frames 204. For purposes of present disclosure an example will be used wherein each frame is about two milliseconds in length. The frame length is the result of a structure having 88 samples per frame at a sampling frequency of 44K.

The energy over each frame is determined 206 where the energy is given by the sum of the squared values of the amplitude. The invention determines whether the energy over each frame is larger than a percentage of the maximum energy for the signal 208, if so, the relevant frame is determined to be voiced 210. Alternatively, the relevant frame is determined to be unvoiced 212. The percentage can be determined by averaging the energy over several frames and determining a percentage which optimizes separation of voiced and unvoiced frames. Alternatively, this percentage can be predefined.

The energy segmentation described above can result in a spike being recognized as an independent voiced frame. In one embodiment the present invention combines these "voiced" spikes (typically of a relatively short duration) with neighboring frames in order to removed the spike from consideration as an independent voiced frame and to dampen the effects of noise. The invention accomplishes this by determining the duration of each frame 214, whereupon the duration is compared to a threshold 216, for example 100 milliseconds. This threshold can be predefined to optimize the removal of spikes while still distinguishing true voiced frames. If the duration is less than the threshold the frame is removed as an independent frame and combined with a neighboring segment 218. Otherwise, if the duration is greater than the threshold, the frame will not be removed. The final segmentation of the audio file into voiced and unvoiced segments is therefore based on the durational threshold 220 as applied to the frames. The final segmentation is clear of spikes, both within the voiced and unvoiced segments.

2. Keyword/Phrase Finding (Fig. 1, block 104)

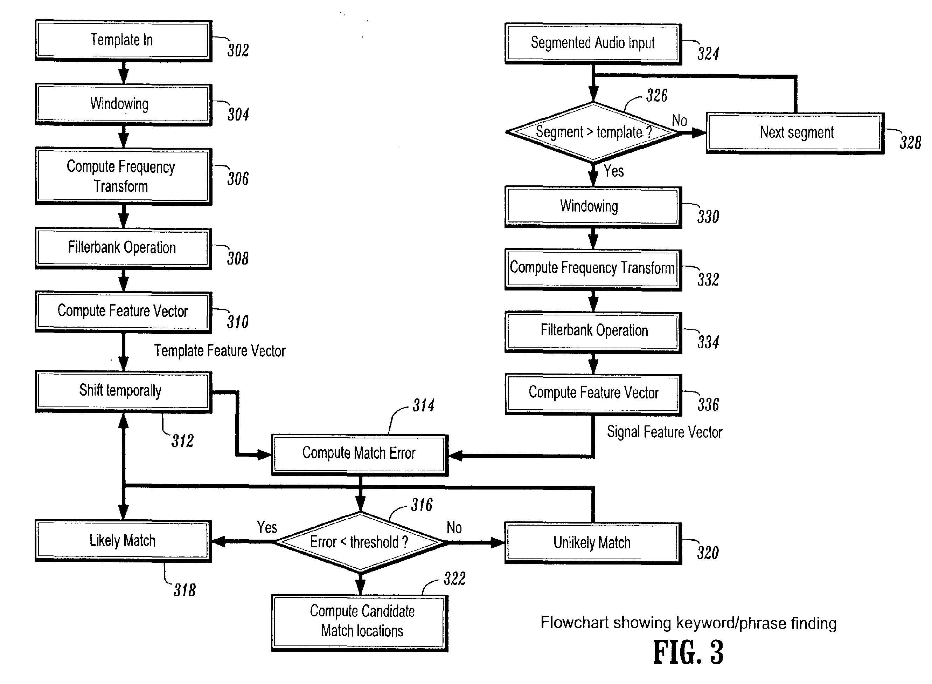

A preferred embodiment of the present invention will now be described with respect to Fig. 3. In one embodiment of the present invention, authoring is accomplished in a semiautomatic fashion. Using speech recognition technology, predefined keywords and/or phrases (herein after "keywords") can be identified within the audio. In another embodiment, keywords can be identified manually. The invention automatically links the predefined keywords to other areas of the document having the same or analogous keywords. These linked keywords can be found in, for example, text, video, and audio. Alternatively, these links can be established manually. The audio can be a different segment of the same file. The present invention also includes a cross-document implementation. The AIU file includes links for referencing other documents.

The user may point out, either within the same file or a different audio file, the word and/or phrase of interest. For example, in an electronic multimedia document explaining the workings of a power plant, an audio file may contain the word "rotor" which can be linked to a detailed explanation of the rotor. The portion of the audio that contains a voiced word or phrase to be located by the method is a template, for example, the audio containing the word "rotor".

According to one embodiment of the present invention, a method processes a template 302. The method searches for other instances of the template; this search can take place in both the audio file containing the template and other multimedia documents, for example, a text file.

The invention utilizes a method of windowing 304 to organize the audio for the template search. The method sets a window size, for example, to 256 samples. The first 256 samples in the file form the first window. The second window includes the next 256 samples from the audio file shifted from the first window by one frame, or 88 samples in the example. The third window is shifted by one frame therefrom, and so on. Thus, there can be significant overlap between adjacent windows. The use of rectangular windows results in aliasing, which in turn manifests as leakage. Aliasing is the result of analog data being represented in digital form. A rectangular window can have an infinite frequency spread and thus, in a finite computation, aliasing results.

To solve this problem a method of windowing 304 can be used wherein the input signal is multiplied by the window coefficients. One example of such a window used for speech processing is the Hamming window though other methods are contemplated, such as Blackman and Hann windowing. The Hamming window can be expressed as:

$$w(n) = 0.54 - 0.46 \cos(2\pi n/N - 1) n \in (0, N - 1)$$

$$0.0 \, otherwise$$

where $N = 256$, and the windowed sequence is given as:

$$x_w(n) \equiv w(n) \times x(n)$$

where $x(n)$ is the original sequence and $x_w(n)$ is the windowed sequence. Now for each window, the Discrete Cosine Transform (DCT) is computed to transform the signal to a frequency domain 306.

$$X(\xi) = \sum_{n=0}^{N-1} x_w(n) \cos(\xi n)$$

The frequency spectrum is covered with a set of eight overlapping bandpass filters 308. The energy output of these filters constitutes the feature vector 310 for that window. Thus, the filter bank is given as:

$$Y(m) = \sum_{\xi=b_m-\delta_m}^{b_m+\delta_m} X(\xi) U_{\delta_m}(\xi + b_m)$$

where $U_{\delta_m}(\xi)$ is the frequency response for the filter and the bank is $\delta_m$. A triangular frequency response with the center frequency $b_m$ can be used.

At this point the template 302 has been processed for facilitating the determination of candidate matches within a segmented audio file 324.

To determine candidate matches, the invention inspects the duration of the template 302 and the segmented audio input 324 signal to determine possible segment matches 326. In block 312, the method moves the template (audio segment) being searched for along the larger audio temporally and computes the correlation 326.

If a segment is long enough to be a match 326 it is further analyzed 330-336 to extract feature vectors in a fashion similar to that of the template array via frequency 308 and filterback analysis 310. In one embodiment of the present invention a "least squares matching technique" determines the point or area of least error in a frame-by-frame manner for each of the identified segments. The error at a given location, k, is given as:

$$E(k) = \sum_{N_t} \sum_m \left( Ysignal(m) - Ytemplate(m) \right)^2$$

where $N_t$ is the number of frames in the template 314. If the error is below a defined threshold 316, the invention will determine a match has been found 318. If the error is greater than a threshold, the correlation between the template and the section of the referenced audio file where the search is performed is determine to be low, therefore, no match is registered 320. When a match is registered, the temporal shift for the template indicates the location in the referenced audio file where the match occurs 322.

3. <u>Link Definition and AIU File Creation</u> (Fig. 1 block 106)

a. Audio Document Structure

According to a preferred embodiment of the present invention, the structure of each audio document is defined in Standard Generalized Markup Language (SGML) to capture the information extracted during segmentation and keyword finding. The segments that result in a template match are termed Anchorable Information Units (AIUs) . An audio document is therefore represented as an instance of the Audio AIU Document Type Definition (DTD). Because the audio documents are structured in SGML, it is possible to perform automatic hyperlinking between the audio documents and other documents. When a user selects an object or hyperlink during playback, the link is navigated to the desired destination.

After processing, each audio file is associated with an AIU file, which contains all the relevant information extracted from the audio file. Other multimedia documentation tools, such as an audio player or web browser, are able to manipulate the audio files through their corresponding AIU files. The AIU file is defined in a hierarchical manner as follows: at the root the invention has the AIUDoc definition encompassing the header, footer and the extracted information within the AudioDocX field.

```
<!ELEMENT      AIUDoc           - - (DocHeader, AudioDocX,
DocFooter)>
<!ATTLIST      AIUDoc
               Id               CDATA      #IMPLIED
               Type             CDATA      #IMPLIED
               Name             CDATA      #IMPLIED
      >
```

The definition of the DocHeader is given as:

```
<!ELEMENT      DocHeader        - - (DocType, DocDesc)>
<!ATTLIST      DocHeader
               Id               CDATA      #IMPLIED
               Type             CDATA      #IMPLIED
               Name             CDATA      #IMPLIED
      >
```

and the fields (defined below) in the AudioDocX are given by:

```
<!ELEMENT    AudioDocX      - - (AudioSeg | AudioAIU)*)>
<!ATTLIST    AIUDoc
             Id             CDATA     #IMPLIED
             Rate           CDATA     #IMPLIED
             Axis           CDATA     #IMPLIED
             DimSpec        CDATA     #IMPLIED
             FrameSize      CDATA     #IMPLIED
             SchedAttrName  CDATA     #IMPLIED
    >
```

The AudioSeg field, which characterizes different story lines is defined as:

```
<!ELEMENT    AudioSeg       - - (AudioSeg2 | AudioAIU)*)>
<!ATTLIST    AudioSeg
             Id             CDATA     #IMPLIED
    >
```

while the AudioSeg2 fields, which are the segments in a story that are voiced:

```
<!ELEMENT    AudioSeg       - - (AudioAIU*)>
<!ATTLIST    AudioSeg
             Id             CDATA     #IMPLIED
             StartFrame     CDATA     #IMPLIED
             EndFrame       CDATA     #IMPLIED
             SchedAttrName  CDATA     #IMPLIED
        >
```

The AIUs (AudioAIU) are defined using the following fields:

```
<!ELEMENT    AudioAIU       - - (Link*)>
<!ATTLIST    AudioAIU
             Id             CDATA     #IMPLIED
             Type           CDATA     #IMPLIED
             Name           CDATA     #IMPLIED
             BoundaryFrames CDATA     #IMPLIED
        >
```

Thus an AIU file is a sequence of one or more parsable character data. In this example, it is a string of ASCII characters and numbers. For a detailed discussion of the SGML syntax see ISO, SGML, ISO8879:1986 *Text and Office Systems-Standard Generalized Markup Language,* 1986, incorporated herein by reference. While most of the important attributes that are relevant to the Audio AIUs are list above, there may by other optional attributes that are relevant for AIUs related to other media types. As mentioned above, the structure of the audio document is in a hierarchical manner.

At the root of the hierarchy is the entire audio. This is divided into stories, which are further divided into segments. The AIU file starts with a description of the type of the underlying media, which in this case is audio. The document header consists of four different fields including the underlying audio file name, a unique ID for the whole audio, a document type definition, which explains the context of the audio, and a more specific document description explaining the content of the audio.

Typically, the information extracted from the audio is stored within the AudioDocX structure. Each AudioAIU has a unique ID derived from the Id of the audio file itself and also contains the rate information. Rate information is the sampling rate with frame size defining the number of samples per frame as well as the basis on which the audio is divided temporally, which in this case is via a numeral indicating the frame number. The complete duration is given by the DimSpec field, which constitutes the start and end frame. The SchedAttrName contains the attribute on which the scheduling is done, which in the current case is a boundary frame.

As mentioned above, the audio is organized in a hierarchical manner using story lines and segments. The segments have the following attributes. There is a unique Id for each segment. The start and end frames of these segments define the extent of theses segments. The AudioAIUs once again have a unique Id. The type is set to audio. Each AIU also has a unique name. The BoundaryFrames field gives the duration of these AIUs.

The following is an example of an audio AIU file. The link definition is described in the following subsection.

```
<AIUDoc Type="Audio">
<DocHeader File="a942ovw.wav" Id="Na942ovw">
<DocType>training</DocType>
<DocDesc>Overview of V94.2 Gas Turbine</DocDesc>
</DocHeader>
<AudioDocX Id="IDA942" Rate="44000" Axis="FrameNumber"
FrameSize="256" DimSpec="1 8000"
SchedAttrName="BoundaryFrames"
<AudioSeg Id="Story1">
<AudioSeg2 Id="IDA942P1" StartFrame="200"
EndFrame="1000"></AudioSeg2>
<AudioSeg2 Id="IDA942P2" StartFrame="1310"
EndFrame="2950"></AudioSeg2>
</AudioSeg>
<AudioSeg Id="Story2">
<AudioSeg2 Id="IDA942P3" StartFrame="3500" EndFrame="5800">
</AudoSeg2>
<AudioSeg2 Id="IDA942P4" StartFrame="6200" EndFrame="7800">
</AudoSeg2>
</AudioSeg>
<AudioAIU Id="AAIU01" Type="audio" Name="350Object1"
BoundaryFrames="350 600">
</AudioAIU>
<AudioAIU Id="AAIU02" Type="audio" Name="520Object2"
BoundaryFrames="520 730">
</AudioAIU>
<AudioAIU Id="AAIU03" Type="audio" Name="1400Object1"
BoundaryFrames="1400 1490">
</AudioAIU>
<AudioAIU Id="AAIU04" Type="audio" Name="4200Object2"
BoundaryFrames="4200 4500">
</AudioAIU>
<AudioAIU Id="AAIU05" Type="audio" Name="6900Object1"
BoundaryFrames="6900 7200">
<BoundaryList>
</AudioAIU>
</AudioDocX>
<DocFooter></DocFooter>
</AIUDoc>
```

The header (i.e., the first five lines) reveals that this is the AIU file for audio file a942ovw.wav. As per the DocDesc line of the DocHeader, the file is a training file describing the operation of a Gas Turbine. The AudioDocX indicates that the audio is sampled at the rate of 44,000 samples/sec. The frame size is 256, i.e., each frame consists of 256 samples. The file includes a total of 8,000 frames.

Following the structural information, the file contains two parts, Story1 and Story2. Story1 includes two voiced segments, as does Story2. There are a total of five AIUs for this audio file, though the invention contemplates other numbers of audio files. The first AIU starts at frame 350 and ends at frame 600. The second AIU starts at frame 520 and ends at frame 730 and so on. As mentioned above, the AIUs may overlap as is evident from the first two AIUs.

b. Hyperlinking Audio Documents

Hyperlinking for the audio AIUs can be done either manually or in an automatic fashion. Manual links can be inserted during the AIU structuring described above. However, since the information extracted from audio is stored in AIU files, the present invention utilizes an Automatic Hyperlinker to automatically hyperlink audio AIUs with all other types of documents based on Hyperlink Specifications. That is, the Hyperlinker processes link specifications, performs pattern matching on the contents and structures of the documents, and establishes links between sources and destination. Also important is how the link information is encoded within the AIU files. Each one of the objects encoded can potentially have a link. Since the present invention has adopted the SGML structure for AIU files the links are entities within that file. Links may also be defined using a similar SGML structure. The an example of a definition and field is given below:

```
<!ELEMENT      Link              - -  ((#PCDATA)+)>
<!ATTLIST      Link
               LinkId        CDATA     #IMPLIED
               Type          CDATA     #IMPLIED
               SubType       CDATA     #IMPLIED
               Linkend       CDATA     #IMPLIED
               Book          CDATA     #IMPLIED
               Focus         CDATA     #IMPLIED
               LinkruleId    CDATA     #IMPLIED
               . . .

     >
```

The Type defines the type of the destination, i.e., if it is text or image or video, etc. Focus defines the text that is highlighted at the linked destination. Book represents the book that the destination is part of. Since our main application is a hyperlinked manual, they are organized as a hierarchical tree, where each manual is represented as a book. Linkend contains the destination information. LinkId is an index to the database if the destination points to that. Link-RuleId indicated what rule created this link. SubType is similar to the Type definition in the AIU specification above. Labels give a description of the link destination. As usual, there can be other optical attributes as well. When the link type is a "Jump", that destination is another point in the same audio, the location (e.g., the frame number) given by the content of the LinkId.

The following is an example of the hyperlinked AIU file. The Link elements are manually and/or automatically added to AudioAIUs that are to be hyperlinked to their destinations during playback.

```
<AIUDoc Type="Audio">
 .  .  .
<AudioDocX Id="IDA942" Rate="44000" Axis="FrameNumber"
FrameSize="256" DimSpec="1 8000"
SchedAttrName="BoundaryFrames"
<AudioSeg Id="Story1">
 .  .  .
</AudioSeg>
 .  .  .
<AudioAIU Id="AAIU01" Type="audio" Name="350Object1"
BoundaryFrames="350 600">
<Link Type="Text" SubType="ID" LinkId="7001"
Linkend="N13509426" Book="31" Labels="Text Document in Vol
3.1">
</Link>
</AudioAIU>
 .  .  .
<AudioAIU Id="AAIU04" Type="audio" Name="4200Object2"
BoundaryFrames="4200 4500">
<Link Type="Text" SubType="ID" LinkId="7003" Linkend="HL233"
Book="31" Labels="Text Document in Vol 3.1">
</Link>
</AudioAIU>
 .  .  .
</AudioDocX>
<DocFooter></DocFooter>
</AIUDoc>
```

The SGML documents (including the AIU files) are pre-indexed using a SGML Indexer. The indexer includes a dictionary listing of SGML elements in the order they appear in the documentation and an index into that dictionary.

Based on user-defined specifications, links are created using pattern matching on these dictionary files. For the Audio AIUs, links can be created to and from them in this way. Details about the hyperlinker can be found in P. Liu, K. Hampel, and A. Hsu. "Towards Automating the Creation of Hypermedia Service Manuals by Compiling Specifications." Proc. IEEE Multimedia (1994): 203-212. In this instance the invention is able to use this machinery within the audio AIU authoring system by being able to structure the Audio information using the AIU specification language as explained above. This also allows the present invention to use a hyperlink management system that is able to incrementally update link rules. Specifically, a link manager carries this out.

The link manager uses the link database to keep track of link rule changes by using time stamps. Incremental hyperlinking is done either by changing existing link specification or by adding some extra link specifications. When adding new link specifications, the hyperlinker executes the new link specification on all documents, adds new links without destroying the old links. When a link becomes obsolete, based on the Id of the old link, the old links are removed. A similar procedure is adopted when adding new links.

5. Hyperlinked Audio Player and Browser (Fig. 1, block 108)

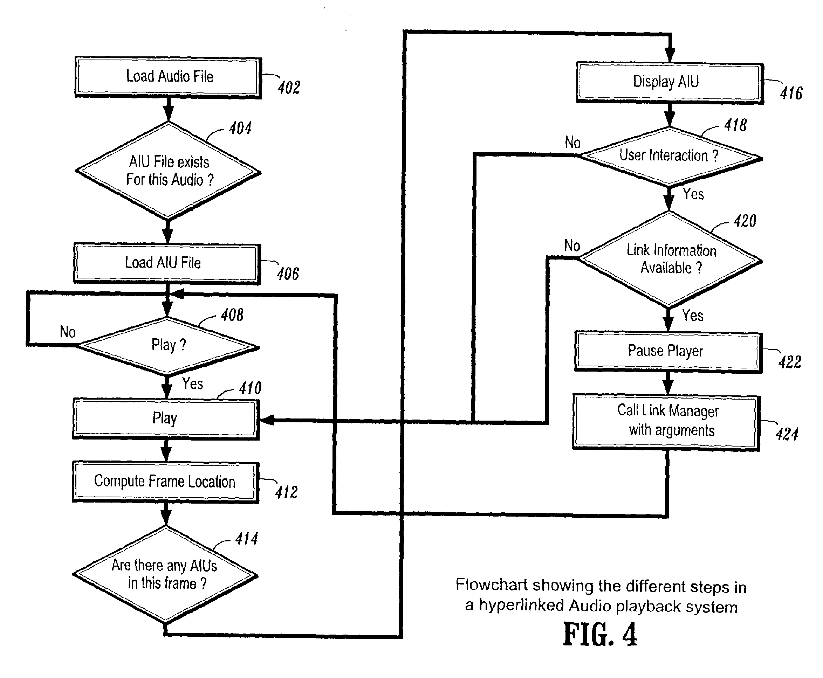

A preferred method of hyperlinking audio will now be described with respect to Fig. 4. After the hyperlinking has been achieved, it is desirable to be able have functionality during playback. The current implementation modifies a normal audio player to achieve interprocess communication via the link manager. When the player is given a command to load a certain audio 402, while loading the audio, the player also looks to see if an AIU file is available for that audio 404. If so, the AIU is loaded with the original file 406. During playback, the waveform corresponding to the audio file is shown for a certain time window. The location of the playback is also indicated. If the current frame has a hyperlink 414 then a section of the waveform is highlighted in a manner to attract the user's attention 416. If more than one hyperlink is present simultaneously, then a stack of bars appear on the waveform for the duration of the audio. As mentioned above, the overlaps can be arbitrary. However, they would respect the segment boundaries.

If the user clicks on any of the bars 418, communicates with the link manager and the appropriate Link Id 420, and the player pauses the audio 422. The Link Manager then executes the link destination424.

Often within a multimedia documentation environment, this means jumping to a particular point of the text or showing a detailed image of the object in question. In that case the SGML browser jumps to that point in the SGML document. In case it is a jump command, the player is instructed to jump to that location and the audio jumps to that frame. If the user chooses to continue to play again 408, then the player takes off from this location. If the command is not a jump, then the player continues to play from where it had paused. This continues until the audio is over or until the user stops the player.

Having described embodiments for authoring and viewing audio documents, it is noted that modifications and variations can be made by persons skilled in the art in light of the above teachings. It is therefore to be understood that changes may be made in the particular embodiments of the invention disclosed which are within the scope and spirit of the invention as defined by the appended claims. Having thus described the invention with the details and particularity required by the patent laws, what is claimed and desired protected by Letters Patent is set for in the appended claims.

## Claims

1. A method for authoring an audio file comprising the steps of:

   segmenting the audio file into a plurality of voiced and unvoiced segments;
   determining a match between a template and a candidate segment within the segmented audio file; and
   registering the match for use as a hyperlink.

2. The method of claim 1, wherein the step of segmenting further comprises the steps of:

   organizing the audio file into a plurality of frames;
   defining each frame with an energy greater than an energy threshold as voiced;
   defining each frame with an energy less than the energy threshold as unvoiced; and
   removing and combining with a neighboring frame, each frame with a duration less than a time threshold for dampening the effects of noise and determining a final segmentation.

3. The method of claim 1, wherein the step of determining a match further comprises the steps of:

   windowing the segmented audio file into a plurality of windows;
   transforming the segmented audio file to a frequency domain for each window; and
   extracting a feature vector for each window.

4. The method of claim 3, wherein the step of extracting the feature vector further comprises the step of covering a frequency spectrum with a plurality of overlapping bandpass filters, the energy output of these filters constituting a feature vector.

5. The method of claim 1, wherein the template is one of a keyword and a phrase.

6. The method of claim 1, wherein the step of registering matches further comprises the step of saving registered matches in a match file associated with the audio file.

7. The method of claim 1, wherein the matches are anchorable information units and the match file contains the anchorable information units.

8. A computer program product comprising:

   a computer usable medium having computer readable program code embodied therein for authoring an audio file, the computer readable program code in the computer program product comprising:

   computer readable program code for segmenting the audio file into a plurality of voiced and unvoiced segments;
   computer readable program code for determining a match between a template and a candidate segment within the segmented audio file; and
computer readable program code for registering the match for use as a hyperlink.

9. The computer usable medium of claim 8, wherein the computer readable program code for segmenting further comprises:

computer readable program code for organizing the audio file into a plurality of frames;
computer readable program code for defining each frame with an energy greater than an energy threshold as voiced;
computer readable program code for defining each frame with an energy less than the energy threshold as unvoiced; and
computer readable program code for removing and combining with a neighbor frame, each frame with a duration less than a time threshold for dampening the effects of noise and determining a final segmentation.

10. The computer usable medium of claim 8, wherein the computer readable program code for matching further comprises:

computer readable program code for windowing the segmented audio file into a plurality of windows;
computer readable program code for transforming the segmented audio file to a frequency domain for each window; and
computer readable program code for extracting a feature vector for each window.

11. The computer usable medium of claim 10, wherein the computer readable program code for extracting a feature vector for the plurality of windows further comprises computer readable program code for covering a frequency spectrum with a plurality of overlapping bandpass filters, the energy output of these filters constituting a feature vector.

12. The computer usable medium of claim 8, wherein the template is one of a keyword and a phrase.

13. The computer usable medium of claim 8, wherein the computer readable program code for registering matches further comprises computer readable program code for saving registered matches in a match file associated with the audio file.

14. The computer usable medium of claim 8, wherein the audio file is structured in standard generalized markup language.

15. The computer usable medium of claim 8, wherein the matches are anchorable information units and the match file is an anchorable information unit file comprising the anchorable information units.

16. The anchorable information unit file of claim 15, further comprising:

a header;
a footer; and
an extracted information field.

17. The header of claim 16, further comprising:

an audio type definition;
a file identification; and
a description of the audio file content.

18. The extracted information field of claim 16, further comprising:

a unique identification for each segment; and
a frame boundary definition.

19. A method of playing a hyperlinked audio file comprising the steps of:

loading an anchorable information unit corresponding to an audio file;
representing the audio file during playback; and
indicating the presence of the hyperlink in the representation.

20. The method of claim 19, wherein the step of representing the audio file further comprises the step of displaying a waveform.

21. The method of claim 19, wherein the hyperlink is indicated on a corresponding section of the waveform.

22. The method of claim 19, further comprising the steps of:

pausing the player upon selection of the hyperlink; and
executing a link destination corresponding to the hyperlink.

Different steps in the proposed solution

# FIG. 1

EP 1 197 884 A2

```
                          ┌─────────────────────┐  202
                          │      Audio In       │
                          └─────────────────────┘
                                    │              204
                                    ▼
                          ┌─────────────────────┐
                          │   Organize Audio    │
                          │    into Frames      │
                          └─────────────────────┘
                                    │              206
                                    ▼
                          ┌─────────────────────┐
                          │   Compute Energy    │
                          │    in each Frame    │
                          └─────────────────────┘
                                    │
   210                              ▼         208                        212
┌─────────────┐      Yes    ◇───────────────◇    No    ┌─────────────┐
│  Define as  │◄────────────│ Energy > threshold? │────────►│  Define as  │
│   voiced    │             ◇───────────────◇            │  unvoiced   │
└─────────────┘                     │                     └─────────────┘
      │                             ▼         214                 │
      │                   ┌─────────────────────┐                 │
      └──────────────────►│  Compute duration   │◄────────────────┘
                          │   of each segment   │
                          └─────────────────────┘
                                    │
   218                              ▼         216
┌─────────────────────┐   Yes ◇───────────────◇
│ Remove this segment │◄──────│ Duration < threshold? │
│ and combine with    │       ◇───────────────◇
│     neighbor        │               │ No
└─────────────────────┘               ▼         220
      │                      ┌─────────────────────┐
      └─────────────────────►│   Compute final     │
                             │   segmentation      │
                             └─────────────────────┘
```

Steps in the Audio Segmentation Procedure

# FIG. 2

```
┌─────────────────┐                          ┌──────────────────────┐
│   Template In    │ 302                      │ Segmented Audio Input│ 324
└────────┬────────┘                          └──────────┬───────────┘
         ▼                                               ▼
┌─────────────────┐                                      │      326
│   Windowing      │ 304                        ┌─────────◇──────────┐   No   ┌──────────────┐
└────────┬────────┘                             │ Segment > template ?├──────▶│ Next segment │ 328
         ▼                                       └─────────┬──────────┘        └──────────────┘
┌─────────────────┐                                       │ Yes
│ Compute Frequency│ 306                                   ▼
│   Transform      │                             ┌──────────────────┐
└────────┬────────┘                              │    Windowing     │ 330
         ▼                                       └────────┬─────────┘
┌─────────────────┐                                       ▼
│Filterbank Operation│ 308                        ┌──────────────────────┐
└────────┬────────┘                              │Compute Frequency Transform│ 332
         ▼                                       └────────┬─────────┘
┌─────────────────┐                                       ▼
│Compute Feature Vector│ 310                      ┌──────────────────┐
└────────┬────────┘                              │Filterbank Operation│ 334
      Template Feature Vector                     └────────┬─────────┘
         ▼                                                 ▼
┌─────────────────┐                               ┌──────────────────┐
│ Shift temporally │                              │Compute Feature Vector│ 336
└────────┬────────┘          314                  └────────┬─────────┘
    312                                             Signal Feature Vector
              ┌──────────────────┐                        │
              │Compute Match Error│◀──────────────────────┘
              └─────────┬────────┘
                        │          316
┌─────────────┐   Yes ┌─◇────────────┐   No   ┌──────────────┐
│ Likely Match │◀─────│Error < threshold ?├───▶│Unlikely Match│ 320
└─────────────┘       └────────┬───────┘        └──────────────┘
  318                          ▼    322
              ┌──────────────────────┐
              │  Compute Candidate   │
              │   Match locations    │
              └──────────────────────┘
```

Flowchart showing keyword/phrase finding

# FIG. 3

Flowchart showing the different steps in
a hyperlinked Audio playback system

**FIG. 4**

- Load Audio File — 402
- AIU File exists For this Audio ? — 404
- Load AIU File — 406
- Play ? — 408 (No / Yes)
- Play — 410
- Compute Frame Location — 412
- Are there any AIUs in this frame ? — 414
- Display AIU — 416
- User Interaction ? — 418 (No / Yes)
- Link Information Available ? — 420 (No / Yes)
- Pause Player — 422
- Call Link Manager with arguments — 424

EP 1 197 884 A2